Europäisches Patentamt

European Patent Office

Office européen des brevets

(11) Publication number: **0 439 228 A1**

## EUROPEAN PATENT APPLICATION

(21) Application number: **91200102.1**

(22) Date of filing: **18.01.91**

(51) Int. Cl.⁵: **A01J 25/15, B30B 15/06**

(30) Priority: **19.01.90 NL 9000133**

(43) Date of publication of application:
**31.07.91 Bulletin 91/31**

(84) Designated Contracting States:
**AT BE CH DE DK ES FR IT LI NL**

(71) Applicant: **Tebel B.V.**
**Zwettestraat 30**
**NL-8912 AV Leeuwarden(NL)**

(72) Inventor: **Van der Meulen, Wieger**
**T.E. Teunissenweg 53**
**NL-9104 ER Damwoude(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Cheese press apparatus.**

(57) This invention relates to a cheese press apparatus for simultaneously treating a plurality of cheese moulds, comprising a presser head adapted for upward and downward movement, said presser head in operation exerting a pressure on a plurality of followers each bearing on cheese contained in corresponding cheese moulds, wherein said presser head comprises at least one hollow space (1) filled with fluid under a predetermined pressure, as well as at least one lower plate-shaped member (24) bounding said at least one hollow space (1). According to the invention said plate-shaped member (24) is provided with a multiplicity of bores (4) in which plungers (26) are arranged which extend beyond the presser head and comprise a plunger head (27) directed to said fluid-filled space (1), the fluid pressure in operation acting on said plunger head (27).

FIG.2

## CHEESE PRESS APPARATUS.

This invention relates to a cheese press apparatus for simultaneously treating a plurality of cheese moulds, comprising a presser head adapted for upward and downward movement, said presser head in operation exerting a pressure on a plurality of followers each bearing on cheese contained in corresponding cheese moulds, wherein said presser head comprises at least one hollow space filled with fluid under a predetermined pressure, as well as at least one lower plate-shaped member bounding said at least one hollow space.

A cheese press apparatus for simultaneously treating a plurality of cheese moulds is known from European patent specification 0166486. The known apparatus is designed to simultaneously exert a pressure on a multiplicity of followers of cheese moulds. In order to obtain cheeses of as constant a quality as possible, it is important that the pressure exerted varies as little as possible in magnitude and duration from one cheese mould to another.

Since in practice the amount of curd in a mould may vary slightly, the initial height of the follower arranged on a mould may vary as well. In order to take up such differences in height, which could lead to considerable differences in pressure, according to European patent specification 0166486 a press cushion is used which is made of resilient material and has studs bearing on the followers. The press cushion is capable of taking up differences in height between the followers of a plurality of simultaneously treated moulds, so that all cheeses are subject to substantially the same pressure during substantially the same period of time.

Although the known apparatus is quite satisfactory in practice, it is incapable of taking up all too great differences in height, due to the spring action of the press cushion.

Further, NL patent application 8300099 discloses a cheese press apparatus of the type described hereinabove, wherein a plurality of inflatable hoses are disposed in the hollow space and wherein the plate-shaped member bounding the hollow space at the bottom is also made of resilient material. A drawback of this known apparatus is that owing to the use of hoses in the hollow space, the plate-shaped member is not uniformly under pressure throughout its surface. Further, such a plate-shaped member, like the press cushion known from European patent specification 0166486, permits only a limited difference in height between adjacent cheese moulds.

Accordingly, there is a need for a cheese press apparatus which is capable of subjecting the cheeses to a substantially equal pressing treatment even in the case of relatively large differences in height between the followers of the cheese moulds arranged in the apparatus.

It is an object of this invention to supply the need outlined and generally to provide an effective and reliably operating cheese press apparatus.

To that effect, according to the invention, a cheese press apparatus of the type described hereinabove is characterized in that the plate-shaped member is provided with a multiplicity of bores in which plungers are arranged which extend beyond the presser head and comprise a plunger head directed to the fluid-filled space, the fluid pressure in operation acting on said plunger head.

The invention will now be further described and illustrated with reference to the accompanying drawings, in which:

Fig. 1 diagrammatically shows a longitudinal section of a part of a preferred embodiment of an apparatus according to the invention;

Fig. 2 diagrammatically shows a cross section of a part of an apparatus according to the invention;

Fig. 3 diagrammatically shows a cross section of a detail of an apparatus according to the invention;

Fig. 4 diagrammatically shows an end view of the detail of Fig. 3;

Fig. 5 diagrammatically shows an embodiment of a plunger for use in an apparatus according to the invention;

Fig. 6 schematically shows a side-elevational view of an embodiment of a complete cheese press apparatus according to the invention; and

Fig. 7 diagrammatically shows a top-plan view of the cheese press apparatus of Fig. 6.

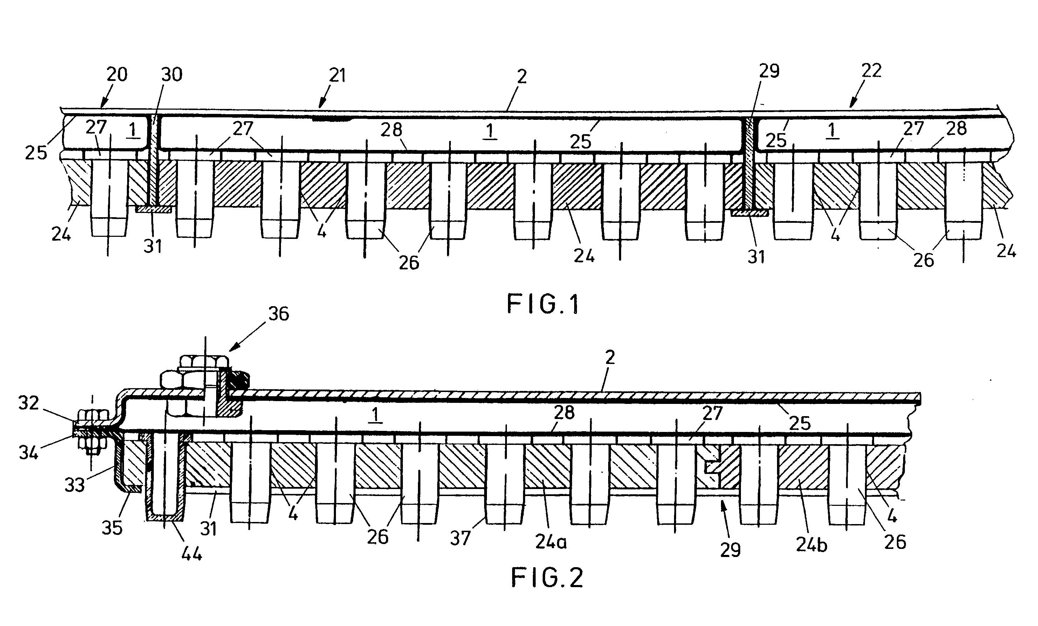

Fig. 1 diagrammatically shows a longitudinal section of a part of one embodiment of a cheese press apparatus according to the invention. Fig. 1 shows a pressure chamber 1 which at the top is closed off by a plate 2 of a suitable material. At the bottom, the pressure chamber is also closed off by a pressure plate 24 having a multiplicity of bores 4 provided in it. Arranged in the bores 4 are substantially identical plungers 26 adapted for upward and downward movement in the bores.

Contained in the pressure chamber is a suitable fluid, for example air, under a predetermined pre-pressure. To prevent the plungers from falling from the bores, they are provided at the end proximal to the pressure chamber with a head 27 of greater diameter than the rest of the plunger.

Now, when during operation of the cheese press apparatus the plates 2 and 24 with the pressure chamber 1 disposed therebetween are moved downwards by means of for instance a plurality of hydraulic or pneumatic cylinders, the feet of the plungers will come to bear on the followers of the cheese moulds arranged in the cheese press apparatus. Since the plungers can all be moved up and down independently of each other, the plungers may accordingly have different operative positions. One plunger may for instance coact with a follower in a relatively high position and an adjacent plunger may at the same time coact with a follower in a lower position.

However, in the pressure chamber 1 the same pressure prevails throughout, so that all plungers, too, exert the same force on the followers, independently of the height of the followers.

A cheese press apparatus built up in this way, comprising one or more pressure chambers and a multiplicity of plungers can thus treat cheese moulds whose followers are disposed at different heights simultaneously.

In the embodiment of Fig. 1, the plunger heads 6 do not themselves constitute a part of the wall of the pressure chamber, but a resilient membrane is disposed over the plunger heads. The membrane forms a wall of the pressure chamber, so that the plungers themselves need not be provided with sealing means.

Although in principle a single membrane can be used, which bounds the pressure chamber only on the side of the plunger heads, the membrane is preferably a wall of a closed hollow pressure cushion which is made of resilient material. The material of the cushion may to some extent be resilient but may also be slack. The pressure cushion may for instance be made of rubber or a suitable plastics. One example of a suitable material is nitrile rubber.

Such an embodiment is diagrammatically shown in Figs. 1 and 2. As can be seen in Fig. 1, the embodiment shown of a cheese press apparatus according to the invention comprises a plurality of sections 20, 21, 22 arranged side by side in longitudinal direction and extending in the transverse direction of the cheese press apparatus.

The sections each comprise a pressure cushion 25 enclosed between an upper plate 2 and a lower plate 24, each pressure cushion forming a pressure chamber 1. As noted above, the pressure chamber can be filled with a gas, such as air, but it might also be a liquid. Each section comprises a plurality - 7 in this example - of rows of plungers 26, arranged side by side. The plungers extend through corresponding bores in plate 24 and have a widened head 27 which is disposed between the top of the plate 24 and the bottom wall 28 of the pressure cushion.

The plates 24 can be made of stainless steel, but preferably they are made of a suitable plastics. Advantageously, the plates 24 may each be composed of a plurality of modules 24a, 24b, as shown in Fig. 2. The modules can be interconnected, for instance by means of a tongue and groove joint 29. Thus, the plates 24 can be readily adjusted to the desired width of a cheese press apparatus to be built up.

The plates 24 or the modules are preferably of some thickness, so that the bores form a proper guide for the plungers. The plungers are thereby prevented from being pressed out of alignment.

The sections 20, 21, 22 are separated from each other by partitions 30, which in this embodiment are inverted T-shaped. The partitions 29 enclose the pressure cushions 25 on the sides. Further, the horizontal flanges 31 of the inverted T-shaped partitions support the plates 24.

At the longitudinal edges of the cheese press apparatus, a substantially z-shaped section 33 is affixed to the bottom of a peripheral flange 32 of the upper plate 2, which section has an upper flange 34 engaging the peripheral flange 32 of the upper plate and a lower flange 35 serving as a support edge for the plates 24 in the same way as the flanges 31 of the partitions 30 do.

In the embodiment shown, the ends of the pressure cushions are also clamped between the flanges 32 and 34. Thus, the pressure cushions can be formed relatively simply from tubular basic material, whose open ends are then clamped and sealed between the flanges 32 and 34. Alternatively, the open ends can be sealed by vulcanisation. The vulcanised ends may optionally be clamped between flanges.

Fig. 2 further shows a valve 36 which can be used for filling a pressure cushion with a suitable fluid. Such a valve is provided for each pressure cushion. If desired, the valve can also be used for connecting a pressure gauge and/or pressure detector, for measuring or detecting the fluid pressure occurring in operation. The pressure gauge or pressure detector may cooperate with a safety device (not shown), which in the case of too high a fluid pressure, may for instance switch off the press or allow fluid to escape.

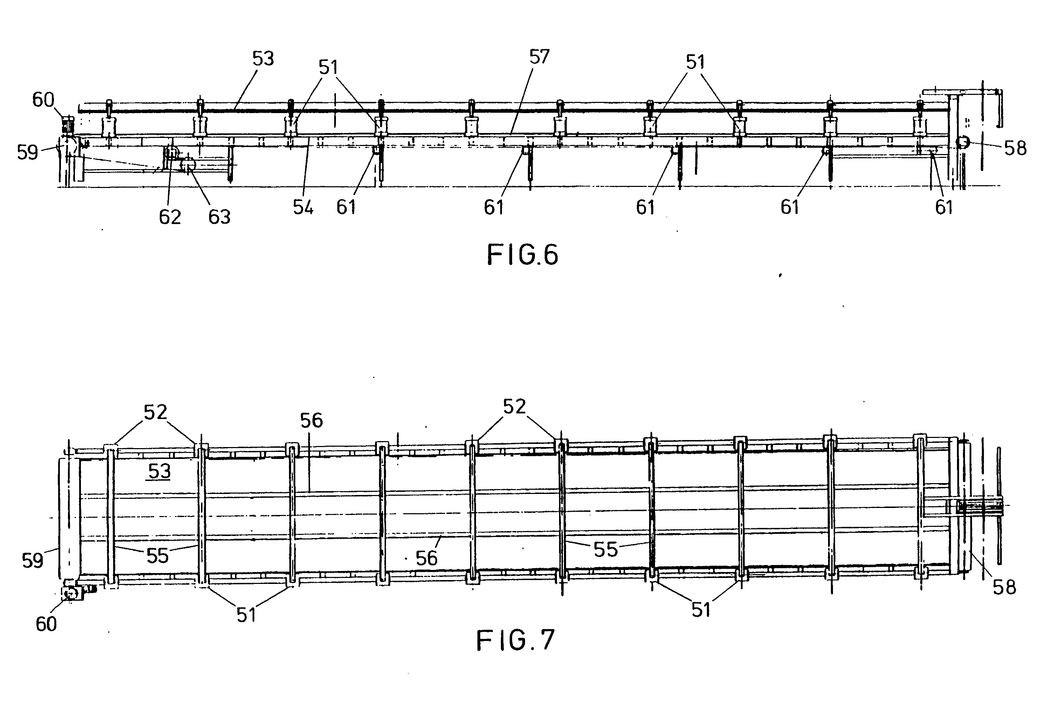

The plungers shown in Figs. 1 and 2 have slightly tapered ends, as indicated for instance at 37. In particular when followers with narrow press edges are used, it may be preferable to use plungers with a widened foot. One example of a plunger with a widened foot is shown in Fig. 5. The plunger 40 shown has a shank 41 and a widened foot 42. The shank and the foot could in principle be detachably interconnected, for instance by means of a screw connection. Preferably, however, the shank and the foot are formed as one whole. In that case, however, measures are necessary to prevent the plungers from falling through the bores in plate 24. In the embodiment shown, the shank is provided at the top end with a circumferential groove 43, adapted to receive a spring clip, for example.

Further, if desired, a pressure member (not shown) can be arranged at the top end of the shank.

The plungers can be made of any suitable compression-resistant material, provided it is suitable for use in dairy-processing apparatus. Stainless steel is a suitable material, but plastics can also be used, for instance the same plastics that is used for cheese moulds.

Further, the plungers may be solid or hollow. Fig. 2 shows an example of a hollow plunger at 44.

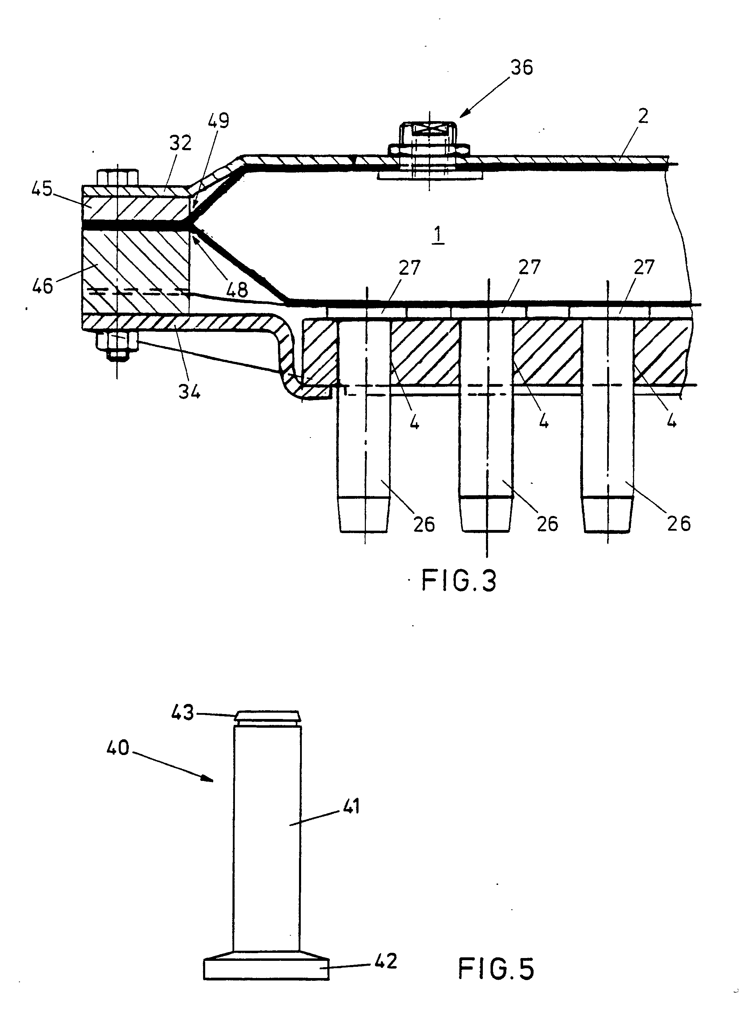

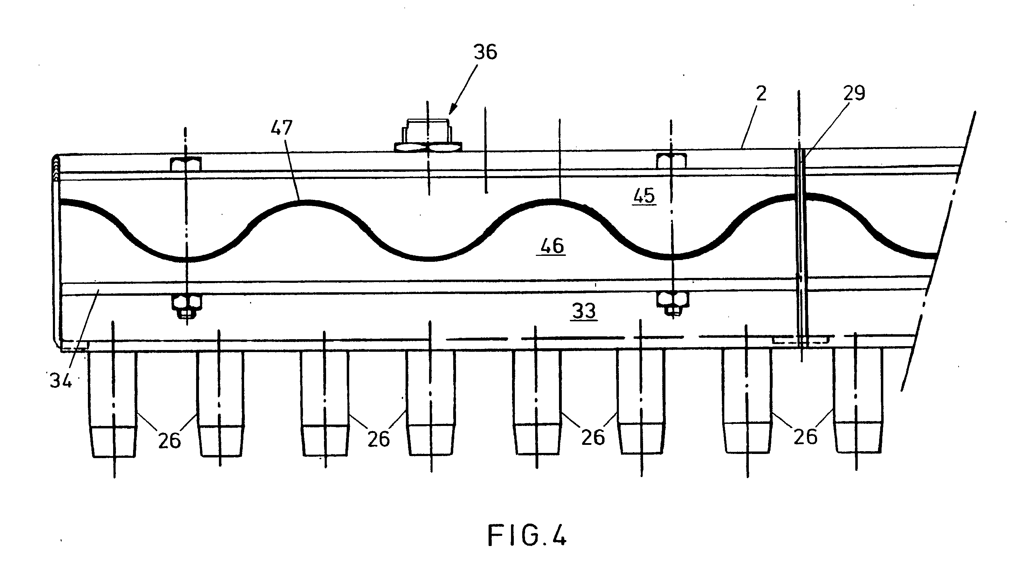

Fig. 4 is another diagrammatic, partly sectional, view of the front or rear end of a section of a cheese press apparatus. The embodiment shown in Fig. 3 is different from Fig. 2 in that the end of the pressure cushion 1 is not directly clamped between the flange 32 of the plate 2 and the flange 34 of the z-shaped section, but between two blocks 45, 46. As can be seen in the front or rear view of Fig. 4, the blocks 45, 46 have surfaces that face each other and have a complementary waveform. Between these waveform surfaces, the end portion 47 of the pressure cushion is clamped tight in a waveform fashion. The waveform serves to take up the greater length which the upper and lower wall acquire when a tubular pressure cushion is flattened.

In the waveform, sharp angles have been avoided to prevent damage to the pressure cushion. For the same reason the edges of the blocks proximal to the pressure chamber are preferably rounded off or bevelled, as shown in Fig. 3 at 48 and 49.

A cheese press apparatus of the multi-plunger type, as described in the foregoing, and provided with a pressure chamber which balances the pressure exerted in operation by the plungers on cheese moulds arranged in the apparatus, can be built up in different ways. According to a first embodiment, a portal-shaped superstructure can be used comprising one or more cross and/or longitudinal girders, with a plurality of pressure cylinders being arranged between the superstructure and the upper plate 2. During a pressing stroke, the cylinders press the pressure chamber down until the plungers bear on the followers of the cheese moulds arranged in the cheese press apparatus. The followers that extend highest are the first to come into contact with the plungers, the plungers being pressed against the followers with the initial pressure prevailing in the pressure chamber. At that stage, the plungers are capable of relative, upward movement, whereby the volume of the pressure chamber is reduced slightly, without this having as yet any influence on the pressure exerted by the plungers. Only when upon a further downward movement a multiplicity of plungers have come into contact with the followers of cheese moulds, can the pressure exerted by the plungers - which is equal to the pressure prevailing in the pressure chamber, and hence is equally high for all plungers - increase gradually. Accordingly, within certain limits, which are determined *inter alia* by the length of the plungers and the height of the pressure chamber, the height at which the followers are disposed may vary freely from one cheese mould to another without the pressing treatment being unacceptably influenced thereby.

A more compact construction of a cheese press apparatus can be obtained by arranging pressure cylinders between the substructure of the press and the edges of the upper plate 2 or cross girders arranged over the upper plate. Such a construction is diagrammatically shown in side-elevational view in Fig. 6 and in top-plan view in Fig. 7.

The cheese press apparatus shown in Figs. 6 and 7 comprises an elongate substructure 50 mounting a plurality of sets of vertical pressure cylinders 51, 52 arranged in uniformly spaced relationship along the two longitudinal edges. In the embodiment shown, ten sets of pressure cylinders are used, whose top ends are connected to a presser head 53 and which are capable of pulling the presser head down. In this manner cheese moulds arranged between the presser head and a support surface 54 formed by the substructure can be subjected to a pressing treatment. A cheese press apparatus thus built up has a relatively small overall height.

The presser head is built up in the way described in the foregoing and comprises at least one pressure chamber which cooperates with a multiplicity of plungers disposed in at least one plate-shaped plunger holder provided with bores.

The pressure chamber preferably consists of a very resilient pressure cushion or a plurality of hollow pressure cushions arranged side by side, filled with a fluid such as air. Preferably, for each pressure cushion a modularly built up plunger holder is provided, as shown in Fig. 3.

The presser head comprises an upper plate which either bounds the pressure chamber(s) directly or keeps the pressure cushions enclosed. In the embodiment shown, transverse sections 55 are disposed over the upper plate and the pressure cylinders are fixed to the ends of the transverse sections. To stiffen the presser head, further, longitudinal sections as indicated at 56 can be used.

The cheese press apparatus shown is capable of simultaneously treating a multiplicity of cheese moulds. To an extent, the cheese moulds may differ in height and need not be accurately placed in the cheese press apparatus at a predetermined pitch.

This affords great freedom in the manner of loading the cheese press apparatus and the cheese press apparatus can always be filled in optimum manner.

For loading the cheese press apparatus, an endless conveyor belt 57 is provided, which is passed over reversing rollers 58, 59 arranged at the beginning and the end of the press apparatus. In the embodiment shown, the reversing roller 59 is driven by an electric motor 60. The upper stretch of the conveyor belt is disposed on the support surface 54 which is formed by the substructure of the press apparatus and during the loading of the press apparatus it is pulled over the support surface. The return stretch of the conveyor belt is disposed under the support surface and is supported by a plurality of support rollers 60. Further, tensioning rollers 62, 63 are used.

When loading the cheese press apparatus, a plurality of cheese moulds arranged side by side are placed on the conveyor belt at the supply end of the press, at roller 58 and the motor 60 is excited precisely in such a manner that sufficient space is created for a next row of cheese moulds to be placed on the conveyor belt. When in this manner the press has been loaded completely, pressing can begin. To determine the extent of loading of the press and the times at which the motor 60 must be excited, sensors, such as light-sensitive cells and the like, can be used.

It is observed that after the foregoing, various modifications will readily occur to anyone skilled in the art. Thus, the support surface of the cheese press apparatus may for instance be provided with discharge channels for whey flowing from the cheese moulds. To that end, the support surface could for instance be built up from profiled material, for instance sheet piling sections.

Such modifications are understood to fall within the scope of the invention.

## Claims

1. A cheese press apparatus for simultaneously treating a plurality of cheese moulds, comprising a presser head adapted for upward and downward movement, said presser head in operation exerting a pressure on a plurality of followers each bearing on cheese contained in corresponding cheese moulds, wherein said presser head comprises at least one hollow space filled with fluid under a predetermined pressure, as well as at least one lower plate-shaped member bounding said at least one hollow space, characterized in that said plate-shaped member is provided with a multiplicity of bores in which plungers are arranged which extend beyond the presser head and comprise a plunger head directed to said fluid-filled space, the fluid pressure in operation acting on said plunger head.

2. A cheese press apparatus according to claim 1, characterized in that in said at least one hollow space a resilient membrane is provided, which is disposed over said plunger heads.

3. A cheese press apparatus according to claim 1, characterized in that said at least one hollow space comprises at least one pressure cushion of resilient material filled with fluid under a predetermined pressure.

4. A cheese press apparatus according to claim 3, characterized in that said at least one pressure cushion is made from a length of tubular material, whose ends are closed off.

5. A cheese press apparatus according to claim 3 or 4, characterized in that said presser head comprises at least one upper plate and at least one lower plate-shaped member, which enclose a hollow space wherein at least one pressure cushion is disposed; that the upper plate forms a flange along at least one of the circumferential edges, which flange is connected to a flange of a section edge of the lower plate-shaped member; and that a peripheral strip of said at least one pressure cushion is clamped between the flange of the upper plate and the flange of the section edge.

6. A cheese press apparatus according to claim 5, characterized in that the section edge is a separate z-shaped section whose upper flange is connected to the upper plate of the presser head, and whose lower flange supports an edge of at least one plate provided with bores with plungers.

7. A cheese press apparatus according to claim 5 or 6, characterized in that between the flange of the upper plate and the flange of the section edge two superposed blocks are arranged whose facing surfaces have a complementary waveform, and that a peripheral strip of the pressure cushion is clamped between the waveform surfaces.

8. A cheese press apparatus according to claim 7, characterized in that the blocks are bevelled or rounded off at the edges turned towards the pressure cushion.

9. A cheese press apparatus according to any one of the preceding claims, characterized in that the fluid is air.

10. A cheese press apparatus according to any one of the preceding claims, characterized in that the lower plate-shaped member is composed of a plurality of plates which are connected to each other by means of corresponding edge profiles.

11. A cheese press apparatus according to any one of the preceding claims, characterized in that at least a number of plungers have a tapered foot.

12. A cheese press apparatus according to any one of claims 1-11, characterized in that at least a number of plungers have a widened foot.

13. A cheese press apparatus according to any one of the preceding claims, characterized in that at least a number of plungers are hollow.

14. A cheese press apparatus according to any one of the preceding claims, characterized in that the plungers are made of plastics.

15. A cheese press apparatus according to any one of the preceding claims, characterized in that said at least one plate-shaped member is made of plastics.

16. A cheese press apparatus according to any one of the preceding claims,, characterized in that the pressure cushion is made of nitrile rubber.

17. A cheese press apparatus according to any one of the preceding claims, characterized in that said at least one fluid-filled space is provided with a valve which is connected to a pressure detection device.

18. A cheese press apparatus according to any one of the preceding claims, characterized in that said presser head comprises a plurality of sections arranged side by side, which are separated by separating members, each section comprising a pressure cushion and a lower plate-shaped member having bores provided with plungers, the lower plate-shaped members of the sections being supported in a peripheral area by a flange formed as part of the separating members.

19. A cheese press apparatus according to any one of the preceding claims, characterized in that said presser head is elongate and provided with a plurality of stiffening sections extending transversely over the presser head, and that between the ends of at least a number of stiffening sections and a substructure of the cheese press apparatus, pressure cylinders are arranged, which upon excitation move the presser head towards the substructure.

20. A cheese press apparatus according to any one of the preceding claims, characterized in that the substructure comprises a support surface for cheese moulds, and that a conveyor belt is provided which is disposed over reversing rollers which are mounted at a supply end and a discharge end of the cheese press apparatus, the upper part of the conveyor belt, serving for transport, resting on the support surface.

21. A cheese press apparatus according to claim 20, characterized in that the support surface is made of profiled material.

**FIG.1**

**FIG.2**

FIG.3

FIG.5

FIG.4

EP 0 439 228 A1

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y,A | NL-A-8 300 099 (H.KOOPMANS)<br>* page 1, line 7 - line 36; figures 1-2 *<br>- - - | 1-2,3-5,9,<br>19-20 | A 01 J<br>25/15<br>B 30 B 15/06 |
| Y,A | CH-A-2 303 22 (DEUTSCHE WAFFEN UND MUNITIONS-FABRIEKEN AG.)<br>* page 1, line 19 - page 2, line 57; figures 1-2 *<br>- - - | 1-2,3-9 | |
| D,A | EP-A-0 166 486 (TEBEL B.V.)<br>* abstract; figures 3-4 *<br>- - - | 1,11,14 | |
| A | NL-A-8 104 030 (SAS B.V.)<br>* page 2, line 37 - page 3, line 11; figure 1 *<br>- - - | 1,3-4,<br>19-21 | |
| A | DE-C-3 039 30 (W.ESCHENBACH)<br>* page 2, line 23 - line 92; figure *<br>- - - | 1,9,17 | |
| A | FR-A-2 308 582 (J.CHANET)<br>- - - - - | | |
| | | | **TECHNICAL FIELDS SEARCHED (Int. Cl.5)**<br><br>A 01 J<br>B 30 B |

The present search report has been drawn up for all claims

| Place of search | Date of completion of search | Examiner |
|---|---|---|
| The Hague | 15 April 91 | NEHRDICH H.J |